(19) Europäisches Patentamt / European Patent Office / Office européen des brevets

(11) **EP 2 609 447 B1**

(12) **FASCICULE DE BREVET EUROPEEN**

(45) Date de publication et mention
de la délivrance du brevet:
**26.10.2016 Bulletin 2016/43**

(21) Numéro de dépôt: **11732497.0**

(22) Date de dépôt: **18.07.2011**

(51) Int Cl.:
*G01S 19/22* (2010.01)    *G01S 19/37* (2010.01)

(86) Numéro de dépôt international:
**PCT/EP2011/062286**

(87) Numéro de publication internationale:
**WO 2012/025306 (01.03.2012 Gazette 2012/09)**

(54) **DISPOSITIF SPATIO TEMPOREL MULTI-ANTENNES MULTI-CORRELATEURS POUR LA REJECTION DES MULTI-TRAJETS DES SYSTEMES DE NAVIGATION**

RAUM-ZEIT-MULTIANTENNEN- UND MULTIKORRELATORVORRICHTUNG FÜR DIE ABLEHNUNG VON MEHRFACHWEGEN IN NAVIGATIONSSYSTEMEN

SPACE-TIME MULTI-ANTENNA AND MULTI-CORRELATOR DEVICE FOR REJECTING MULTI-PATHS IN NAVIGATION SYSTEMS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.08.2010 FR 1003464**

(43) Date de publication de la demande:
**03.07.2013 Bulletin 2013/27**

(73) Titulaires:
• **THALES**
**92400 Courbevoie (FR)**
• **Onera**
**92320 Chatillon (FR)**
• **Centre National d'Etudes Spatiales**
**75039 Paris Cedex 01 (FR)**

(72) Inventeurs:
• **ROUGERIE, Sébastien**
**F-92320 Chatillon (FR)**
• **CARRIE, Guillaume**
**F-92320 Chatillon (FR)**
• **VINCENT, François**
**F-31055 Toulouse Cedex 4 (FR)**
• **RIES, Lionel**
**F-31400 Toulouse (FR)**
• **MONNERAT, Michel**
**F-31240 Saint Jean (FR)**

(74) Mandataire: **Delaval, Guillaume Laurent**
**Marks & Clerk France**
**Immeuble Visium**
**22, avenue Aristide Briand**
**94117 Arcueil Cedex (FR)**

(56) Documents cités:
**EP-A1- 1 255 121**

• **HORNBOSTEL A ET AL: "Simulation of Multi-Element Antenna Systems for Navigation Applications", IEEE SYSTEMS JOURNAL, IEEE, US, vol. 2, no. 1, 1 mars 2008 (2008-03-01), pages 7-19, XP011204046, ISSN: 1932-8184**
• **ALISON BROWN: "Multipath Rejection Through Spatial Processing", INTERNET CITATION, 19 septembre 2000 (2000-09-19), pages 2330-2337, XP007918743, Extrait de l'Internet: URL:http://www.navsys.com/papers/0009003.pdf [extrait le 2000-01-01]**
• **ANTREICH F ET AL: "Maximum likelihood delay estimation in a navigation receiver for aeronautical applications", AEROSPACE SCIENCE AND TECHNOLOGY, ELSEVIER MASSON, FR, vol. 12, no. 3, 1 avril 2008 (2008-04-01), pages 256-267, XP022594086, ISSN: 1270-9638, DOI: DOI:10.1016/J.AST.2007.06.005 [extrait le 2008-04-01] cité dans la demande**

## Description

Le domaine de l'invention concerne les systèmes de navigation par satellite et plus particulièrement les dispositifs de radiolocalisation par calcul de temps de propagation des signaux émis par les satellites.

On entend ici par « système de navigation par satellite » tout système dédié à la navigation large zone, comme par exemple les systèmes existants GNSS (« Global Navigation Satellite System ») appelés GPS, GLONASS ou le futur système GALILEO, ainsi que tous leurs équivalents et dérivés. L'homme de métier connaît bien le principe de localisation des systèmes de navigation par satellite. Le signal radiofréquence émis par un satellite est codé et on utilise le temps mis par ce signal pour atteindre le récepteur à localiser pour déterminer la distance entre ce satellite et ce récepteur, appelée pseudo-distance. Dans la suite de la description, le terme signal radiofréquence désigne un signal en provenance d'un satellite appartenant à une constellation GNSS. La précision des systèmes de navigation par satellite est affectée par un certain nombre d'erreurs. Ces erreurs peuvent se décliner en deux catégories : les contributions globales et les contributions locales. On peut citer pour les contributions globales, les erreurs liées au passage des ondes électromagnétiques dans l'ionosphère et les erreurs liées aux satellites (erreurs d'orbite et erreurs d'horloge). En ce qui concerne les contributions locales, on peut citer les erreurs liées au passage des ondes électromagnétiques dans la troposphère, les erreurs de réflexion des signaux, les erreurs liées aux interférences, les erreurs dues aux zones blanches et le bruit des récepteurs.

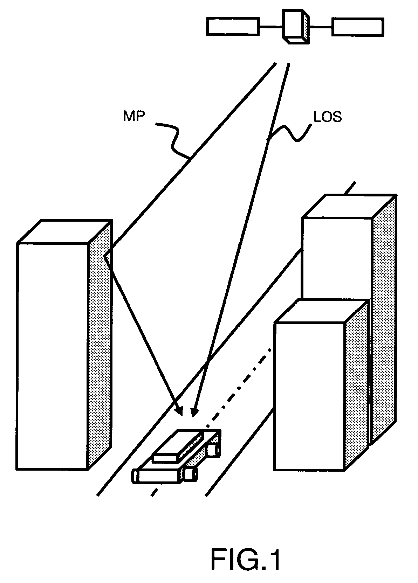

En environnement urbain comme illustré par la figure 1, le dispositif de radiolocalisation est particulièrement affecté par le phénomène de réflexion des signaux sur les obstacles urbains comme par exemple les façades d'immeuble. La figure 1 représente un véhicule automobile circulant en environnement urbain et un satellite émettant des signaux de radiolocalisation. Les multi-trajets MP sur les signaux utiles LOS constituent les défauts prépondérants pour la localisation. En effet, les signaux muti-trajets MP introduisent un biais dans l'estimation du temps de propagation des signaux ce qui provoque des erreurs de localisation du récepteur. Il est important de pouvoir supprimer ou estimer ces multi-trajets pour améliorer la précision de localisation des dispositifs de localisation.

Les solutions existantes proposent selon une première approche de discriminer le signal utile des signaux multi-trajets dans le domaine temporel (respectivement fréquentiel). On peut citer par exemple la publication « Theory and Performance of Narrow Correlator Spacing in a GPS receiver », A.J. Van Dierendonck, Journal of The Institute of the Navigation vol 39, no 3 fall 1992, ou encore la publication «The Multipath Estimating Delay Lock Loop : Approaching Theoretical Accuracy Limits » par R. Van Nee publiée en 1994 dans le journal IEEE pages 246-251. Cette première approche est mise en défaut pour les situations où les signaux multi-trajets présentent un faible retard par rapport au signal utile.

Une seconde approche consiste à discriminer le signal utile des multi-trajets par un filtrage spatial des signaux reçus. Cette approche dite aussi multi-antennes consiste à réaliser un échantillonnage spatial du front d'onde. Cependant, les algorithmes multi-antennes classiques sont inefficaces du fait de la petite taille du réseau entraînant une mauvaise résolution spatiale et de la corrélation entre les sources.

En troisième approche on pourra citer l'invention « METHOD OF PROCESSING MULTIPATH NAVIGATION SIGNALS IN A RECEIVER HAVING A PLURALITY OF ANTENNAS », déposée aux Etats Unis dont le numéro du brevet délivré est US 6,437,733,B1. Cette approche se base sur une décomposition en valeurs singulières de l'espace engendré par les antennes du réseau de manière à identifier le sous-espace contenant le signal de navigation ciblé et ses multi-trajets. L'estimation des retards des différents trajets étant ensuite effectuée par une méthode du type MEDLL. Cette approche est valable uniquement dans le cas où le nombre d'antennes du réseau est supérieur au nombre de trajets reçus par le système. Dés lors qu'on considère un réseau de petite taille (typiquement 4 antennes), cette condition est mise en défaut dans un scénario urbain ou le nombre d'écho dépasse facilement la dizaine.

Enfin, une autre approche consiste en une approche dite spatio-temporelle-fréquentielle utilisant un algorithme nommé « SAGE ». On connaît de l'état de la technique la publication nommée « Channel Parameter Estimation in Mobile Radio Environments Using the Sage algorithm» de Bernard H.Fleury and al. ou la publication nommée « Maximum likehood delay estimation in a navigation receiver for aeronautical applications », de F. Antreich, and Al.. Cet algorithme est capable d'estimer tous les paramètres des signaux reçus, dont les paramètres caractérisant le signal utile et les multi-trajets. Cependant, l'exécution d'un tel algorithme exige des ressources calculatoires conséquentes. Ceci présente le désavantage de ne pas pouvoir proposer de traitement en temps réel des signaux ce qui est un handicap important pour une application de navigation.

L'objectif de l'invention est de proposer un dispositif de localisation par satellite peu ou pas affecté par les erreurs de localisation associées aux phénomènes de multi-trajets. La solution de l'invention n'est peu ou pas affectée par les signaux multi-trajets présentant un faible retard par rapport au signal utile et permet une implémentation matérielle exigeant moins de ressources calculatoires en vue de s'adresser aux dispositifs de localisation grand public disposant d'un nombre réduit d'antennes.

Plus précisément, l'invention a pour objet un dispositif de localisation apte à discrimer un signal utile de signaux multi-trajets. Ledit dispositif comporte au moins deux capteurs de signaux de radiolocalisation et des moyens de traitement des signaux aptes à mettre en oeuvre un algorithme d'estimation du maximum de vraisemblance, chacun desdits capteurs étant connecté à au moins deux lignes de traitement des signaux, chaque ligne de traitement comportant un corrélateur et étant agencée de sorte que les moyens de traitement des signaux calculent des paramètres représentatifs du signal utile et des signaux multi-trajet à partir des signaux issus des lignes de traitement. Les lignes de traitement comportent au moins une ligne de retard connectée par une première extrémité à la sortie du corrélateur et par une seconde extrémité à une entrée des moyens de traitement des signaux, le retard introduit correspondant à un multiple de la durée d'intégration des corrélateurs.

Selon un aspect de l'invention, l'algorithme d'estimation du maximum de vraisemblance est de type « SAGE ».

Les paramètres représentatifs du signal utile et des signaux multi-trajet sont, par exemple, le retard de propagation, la fréquence doppler et la direction d'arrivée.

L'invention a aussi pour objet un système de localisation comportant un assemblage de D dispositifs tels que décrits précédemment de manière à traiter D signaux de radionavigation en provenance de D satellites distincts. Dans un mode de réalisation préféré, D est supérieur ou égal à 4.

L'invention a aussi pour objet un procédé d'estimation des paramètres de signal utile et de signaux multi-trajet originaires d'un signal de radiolocalisation émis par un satellite au moyen d'un dispositif de localisation comportant au moins deux capteurs aptes à recevoir ledit signal. Le procédé comporte les étapes suivantes :

- une étape de corrélation avec un code local du signal reçu par les dits capteurs au moyen de corrélateurs,
- une étape de construction pour chaque capteur d'une fonction d'intercorrélation échantillonnée du signal reçu avec le code local, ladite fonction correspondant à un vecteur composé de l'ensemble des valeurs produites sur une période d'intégration Tint par chaque lignes de retard de l'ensemble des lignes de traitement associées à un capteur ;
- une étape de détermination d'une fonction d'intercorrélation spatio-temporelle, ladite fonction étant obtenue par concaténation des vecteurs obtenus à l'étape précédente pour chaque capteur ;
- une étape de calcul d'une vraisemblance à partir de la fonction d'intercorrélation spatio-temporelle ;
- une étape d'estimation des paramètres représentatifs du signal utile et des signaux multi-trajet par application d'un algorithme de maximum de vraisemblance.

La présente invention permet une réduction de la charge mémoire et du coup calculatoire pour mettre en oeuvre la fonction d'estimation du maximum de vraisemblance. De plus, la solution proposée est indépendante du système de navigation par satellite transmettant les signaux de navigation. Ainsi le dispositif de localisation est capable de fonctionner avec tout type de système de navigation existant et futur basé sur les techniques d'étalement de spectre.

L'implémentation d'une architecture de type « Spatio-temporal Adaptive Processor » STAP post-corrélation rend l'algorithme plus robuste aux limitations de l'étage RF et en particulier au filtrage. Ce type d'architecture comprend des lignes de retard désignées habituellement par le mot anglais « taps ».

En effet, le principe du maximum de vraisemblance consiste à comparer le signal reçu avec un modèle de signal le plus vraisemblable possible. L'impact de l'étage RF est relativement complexe à prendre en compte sur le modèle des signaux pré-corrélation et ce n'est donc généralement pas fait dans les récepteurs classiques. Cependant, si on se situe après l'étape de corrélation avec un code local, l'impact de l'étage RF est facilement modélisable et peu complexe à prendre en compte dans l'algorithme du maximum de vraisemblance. Par exemple, l'impact du filtrage RF sur la fonction d'intercorrélation du signal reçu avec une réplique locale non filtrée se traduit par un lissage et une dissymétrie de la fonction d'intercorrélation idéale.

L'invention sera mieux comprise et d'autres avantages apparaîtront à la lecture de la description qui va suivre donnée à titre non limitatif et grâce aux figures annexées parmi lesquelles :

La figure 1 illustre un mobile recevant les signaux de radiolocalisation émis par un satellite dans un environnement urbain.

La figure 2 représente un schéma d'une architecture de dispositif de localisation selon l'invention.

La figure 3 est un graphique d'estimation des performances de simulation des paramètres des multi-trajets et du signal utile au moyen d'un dispositif selon l'invention.

La figure 4 est un graphique d'estimation des performances de simulation des paramètres des multi-trajets et du signal utile au moyen d'un dispositif conventionnel par traitement d'un algorithme SAGE.

Le dispositif de localisation selon l'invention comporte une pluralité de capteurs A1, A2, An. Ces capteurs sont des antennes élémentaires conçues pour capter les signaux de radiolocalisation émis par les satellites d'un système de navigation tel que le système GPS ou Galileo. Le réseau de capteurs A1, A2, An permet d'obtenir l'information directionnelle par échantillonnage spatial du front d'onde reçu.

Le dispositif de localisation comporte également des moyens de traitement des signaux reçus par l'ensemble des capteurs A1, A2 à An. Des lignes de traitement de signal sont connectées en sortie de chaque capteur. Les lignes de traitement sont associées à un corrélateur. Ces corrélateurs forment un banc de corrélateurs et fonctionnent les uns par rapport aux autres avec un décalage temporel. Ce décalage est exprimé par exemple en fractions de chips et est habituellement désigné par l'expression anglo-saxonne « chip spacing ».

Pour rappel, les systèmes de radionavigation par satellite se basent habituellement sur une constellation de satellites, lesdits satellites émettant en utilisant la technologie CDMA, acronyme venant de l'expression anglo-saxonne « Coded Division Multiple Access ». Un code spécifique est associé à chaque satellite de la constellation et est utilisé pour émettre un signal de radionavigation.

L'utilisation d'un banc de corrélateurs avec un fonctionnement décalé dans le temps permet de construire une fonction d'intercorrélation entre un code local et le signal de radionavigation. Le code local est le même que le code utilisé par le satellite émettant le signal de radionavigation à traiter.

Chaque corrélateur fournit une valeur toutes les périodes Tint, Tint correspondant à la durée d'intégration desdits corrélateurs. En d'autres termes, cet ensemble de corrélateurs permet d'échantillonner la fonction d'intercorrélation dans le domaine des retards.

Pour que le dispositif selon l'invention puisse traiter plusieurs signaux de radionavigation en provenance de plusieurs satellites, il faut utiliser un banc de corrélateur pour chaque signal de radionavigation, un banc de corrélateur étant associé à un code local donné. 4 bancs de corrélateurs peuvent être utilisés pour pouvoir traiter 4 signaux de radionavigation en provenance de quatre satellites distincts. Le nombre de lignes de traitement et de lignes de retard est alors augmenté en proportion. Dans la suite de la description, un mode de réalisation simplifié ne traitant qu'un signal de radionavigation est décrit. Cet exemple n'est pas limitatif et le dispositif selon l'invention peut être étendu au traitement d'une pluralité de signaux de radionavigation.

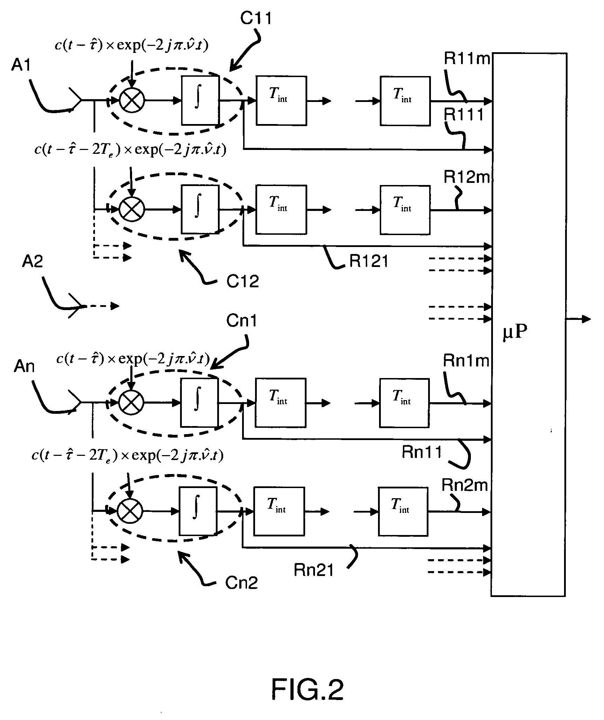

Nous décrivons dans ce paragraphe la chaîne de traitement du signal comprise entre la sortie du capteur A1 et les moyens de calcul mettant en oeuvre l'algorithme du maximum de vraisemblance. La présence de l'étage RF, de descente en fréquence et d'un éventuel convertisseur analogique-numérique en sortie de chaque antenne n'étant pas utile à la compréhension de l'invention, ces éléments ne sont pas représentés sur la figure 2, le lecteur pourra les considérer comme faisant partie des capteurs. Le capteur A1 est relié à une première ligne comportant successivement un corrélateur C11 (constitué d'un multiplicateur et d'un intégrateur), puis une première ligne de retard R111 et une $m^{ième}$ ligne de retard R11 m, les dites lignes étant connectées en parallèle. La sortie des lignes de retard est connectée à des moyens de calcul pouvant mettre en oeuvre un algorithme de maximum de vraisemblance.

L'ensemble des corrélateurs permet d'obtenir une estimation de la fonction d'intercorrélation entre le code local (généré dans le récepteur) et le code reçu afin de pouvoir estimer les retards des différents signaux.

La corrélation du signal reçu avec le code local a pour effet de desétaler le signal de radionavigation, et donc d'augmenter le rapport signal à bruit, mais également de filtrer les signaux dont les fréquences Doppler sont supérieures à l'inverse de la durée d'intégration.

Dans le cadre de l'invention, l'évolution de la phase du signal due au décalage Doppler est faite par le biais des lignes de retard. Cela permet d'estimer les fréquences Doppler des signaux reçus et donc d'aider à leur discrimination. Le dispositif selon l'invention met en oeuvre des corrélateurs sur des durées d'intégration courtes, par exemple 1 ms. Lesdits corrélateurs sont associés à un nombre m de lignes de retard, avec par exemple m = 20. L'exploitation de l'ensemble des lignes de retard permet d'obtenir le même rapport signal à bruit que dans le cas d'une intégration longue, par exemple de 20 ms, tout en permettant d'estimer les fréquences Doppler des signaux captés, les fréquences Doppler inférieures à 50 Hz pouvant être détectées.

Les lignes à retard vont donc échantillonner le signal post-corrélation avec une période d'échantillonnage de Tint afin de pouvoir estimer les fréquences Doppler des différents signaux. En d'autres termes, l'utilisation des lignes de retard permet de stocker et d'utiliser un historique des sorties des corrélateurs. On a ainsi accès à l'évolution temporelle des sorties de corrélation ce qui permet notamment de retrouver et d'exploiter les informations de Doppler des signaux captés par le dispositif.

A la suite du traitement de corrélation, des lignes de retard R111 et R11 m sont connectées en sortie de l'intégrateur. Ces lignes de retard sont disposées en parallèles. L'écart introduit par chaque ligne de retard correspond toujours à un multiple de la durée d'intégration du corrélateur. A titre d'exemple non limitatif, la première ligne de retard R111 n'introduit pas de retard, un retard de Tint est introduit par la seconde ligne de retard R112 et la $m^{ième}$ ligne de retard R11 m introduit un retard de (m-1)Tint. La ligne de traitement peut comporter un nombre m de lignes de retard en parallèle, chaque ligne de retard étant espacée d'une durée Tint correspondant à la durée d'intégration des corrélateurs. Les lignes de retard peuvent être élaborées par tout moyen de traitement du signal en analogique comme numérique. De même, le capteur A1 est relié à une seconde ligne de traitement comportant successivement un corrélateur C12 espacé d'une fraction de la période symbole du code d'étalement (durée notée Te sur la figure 2) par rapport au corrélateur C11 et m lignes de retard R121 à R12m agencées de la même façon que la première ligne de traitement. Le capteur A1 peut être relié à des troisième et quatrième lignes de traitement et voire plus qui ne sont pas présentées sur la figure 2. Les lignes de traitement comportant les corrélateurs C11 et C12 sont identiques. Plus généralement, les structures des lignes de traitement en sortie de chaque antenne sont identiques entre elles.

Le dispositif de localisation comporte une pluralité de capteurs A1 à An et chaque capteur est connecté à une ligne de traitement telle que décrite précédemment à la suite du capteur A1. Les capteurs et les lignes de traitement, comportant les lignes de retard, forment un réseau Spatio-temporel multi-corrélateurs.

Les lignes de retard sont reliées directement sur de multiples entrées à des moyens de calcul et de traitement µP mettant en oeuvre un algorithme de maximum de vraisemblance. Plusieurs types d'algorithme de maximum de vraisemblance peuvent être mis en oeuvre. De préférence, un algorithme de type SAGE traite les signaux issus des lignes de retard dans le but d'estimer les paramètres caractéristiques des signaux reçus (direction incidente en azimut et élévation, retard, Doppler par exemple). L'estimation de ces paramètres permet de discriminer le signal utile des signaux multi-trajets. L'algorithme de maximum de vraisemblance est apte à traiter les signaux provenant du système implémenté selon une architecture Spatio-temporelle multi-corrélateurs.

Nous détaillons maintenant les étapes du calcul des paramètres des signaux (trajet direct et multi-trajets) reçus par le système.

L'expression y(t) du signal ramené en bande de base en sortie des antennes peut se mettre sous la forme :

$$\mathbf{y}(t) = \sum_{l=0}^{L-1} \mathbf{a}(\theta_l, \varphi_l) \times \gamma_l \times \exp(2j\pi.\nu_l.t) \times c(t - \tau_l) + \mathbf{b}(t)$$

où l'indice « $l$ » correspond au nombre de trajets reçus pour un même signal (trajet direct et échos), le numéro '0' étant affecté au trajet direct, $a(\theta, \varphi)$ représente le vecteur directionnel du réseau d'antennes en fonction des angles d'arrivée $\theta$ et $\varphi$ de chaque signal. $\gamma_l$ représente l'amplitude complexe du signal, $\nu_l$ sa fréquence Doppler, $\tau_l$ son retard de propagation, c(.) le code d'étalement et enfin b(.) représente le vecteur bruit thermique en sortie de chaque antenne.

Ce signal traverse ensuite les corrélateurs représentés sur la figure 2. L'expression **X** du signal reçu post-corrélation pour l'architecture STAP multi-corrélateurs proposée peut se mettre sous la forme vectorisée suivante :

$$\mathbf{X} = \sum_{l=0}^{L-1} \mathbf{X}_l(\psi_l) + \mathbf{b}_{mp,T_{\text{int}}}$$

avec

$$\psi_l = [\gamma_l, \theta_l, \varphi_l, \tau_{rl}, \nu_{rl}]^T$$

$$\mathbf{X}_l(\psi_l) = \tilde{\gamma}_l \times \mathbf{a}(\theta_l, \varphi_l) \otimes \tilde{\mathbf{R}}_C(\varepsilon_\tau - \tau_{rl}, \varepsilon_\nu - \nu_{rl})$$

On rappelle que m représente le nombre de ligne à retard par ligne de traitement, p désigne le nombre total de lignes de traitements par antenne et n représente le nombre d'antennes.

$\mathbf{b}_{mp,Tint}$ représente le vecteur bruit thermique en sortie de chaque antenne intégré sur une durée $\mathbf{T}_{\text{int}}$, $\psi_l$ représente le vecteur des paramètres à estimer pour le trajet '$l$' et **X**, $\mathbf{X}_l$, et $\mathbf{b}_{mp,Tint}$ de dimension $m \times n \times p$.

On note $\tau_{rl}$ et $\nu_{rl}$ les retards et décalages Doppler relatifs du trajet '$l$' par rapport au trajet direct. Le corrélateur est asservi sur le trajet direct et commet une erreur $\varepsilon_\tau$ sur le code (retard compté positivement) par rapport au Tap de référence d'indice '0' et $\varepsilon_\nu$ sur la fréquence du trajet direct. $\tilde{\gamma}_l$ désigne l'amplitude complexe du signal post corrélation. La notation (.)$^T$ représente la transposée d'un vecteur, (.)$^H$ représente la transposée-conjuguée d'un vecteur et l'opérateur $\otimes$ représente le produit de Kronecker.

La matrice de corrélation temporelle $\tilde{\mathbf{R}}_c$ du signal est construite de la façon suivante.

Dans un premier temps, les sorties multi-corrélateurs sont concaténées dans un vecteur colonne pour reconstruire une fonction d'intercorrélation échantillonnée du signal reçu avec le code local. Un tel vecteur colonne est déterminé pour chaque capteur et est donc composé des valeurs produites par chaque ligne de traitement associé à un capteur. Pour rappel, une valeur de corrélation est générée par chacun des corrélateurs à chaque période Tint. Il y a donc m valeurs disponibles par ligne de traitement, m étant le nombre de lignes de retard utilisé par chaque ligne de traitement. Ainsi, le vecteur colonne obtenu correspond à la concaténation de m vecteurs comprenant chacun p valeurs.

Dans un mode de réalisation préféré, le même nombre m de lignes de retard est le même pour les p lignes de traitement.

En d'autres termes, les fonctions d'intercorrélation obtenues pour différents Taps post-corrélation sont concaténées toujours dans un vecteur colonne de manière à tracer l'évolution temporelle des fonctions d'intercorrélation. Cette évolution temporelle permettra de caractériser les Doppler relatifs des échos.

$$\tilde{\mathbf{R}}_C(\varepsilon_\tau - \tau_{rl}, \varepsilon_v - v_{rl}) = \begin{bmatrix} r(\varepsilon_\tau - \tau_{rl,1} + \frac{(p-1)}{2}T_e) \times \exp[-2j\pi.(\varepsilon_v - v_{rl}).T_{\text{int}}] \\ \vdots \\ r(\varepsilon_\tau - \tau_{rl,1} - \frac{(p-1)}{2}T_e) \times \exp[-2j\pi.(\varepsilon_v - v_{rl}).T_{\text{int}}] \\ r(\varepsilon_\tau - \tau_{rl,2} + \frac{(p-1)}{2}T_e) \times \exp[-2j\pi.(\varepsilon_v - v_{rl}).2.T_{\text{int}}] \\ \vdots \\ r(\varepsilon_\tau - \tau_{rl,2} - \frac{(p-1)}{2}T_e) \times \exp[-2j\pi.(\varepsilon_v - v_{rl}).2.T_{\text{int}}] \\ \vdots \\ r(\varepsilon_\tau - \tau_{rl,m} - \frac{(p-1)}{2}T_e) \times \exp[-2j\pi.(\varepsilon_v - v_{rl}).m.T_{\text{int}}] \end{bmatrix}$$

avec $r()$ la fonction d'intercorrélation d'un code reçu avec sa réplique locale.

Les décalages Doppler relatifs sont supposés constants sur la durée de traitement m.$T_{int}$, les retards relatifs évoluent comme : $\tau_{rl,m} = \tau_{rl,0} + m\frac{v_{rl}}{f_C}T_{\text{int}}$ où $f_c$ désigne la fréquence porteuse du signal.

Afin d'appliquer le maximum de vraisemblance, on détermine une fonction d'intercorrélation spatio-temporelle $\mathbf{X}_l(\psi_l)$. Pour cela, les matrices colonne de corrélation temporelle $\tilde{\mathbf{R}}_c$ obtenues en sortie de chacun des capteurs sont concaténées en un vecteur colonne.

Selon l'architecture Spatio-temporelle multi-corrélateurs proposée sur la figure 2, la matrice d'autocorrélation temporelle $\tilde{\mathbf{R}}_p$ du bruit post-corrélation est égale à celle du code local pré-corrélation et est indépendante du Doppler, elle s'écrit :

$$\tilde{\mathbf{R}}_P = \begin{bmatrix} r(0) & r(Te) & \cdots & \cdots & r(p.Te) \\ r(Te) & r(0) & r(Te) & & \vdots \\ \vdots & r(Te) & r(0) & r(Te) & \vdots \\ \vdots & & r(Te) & r(0) & r(Te) \\ r(p.Te) & \cdots & \cdots & r(Te) & r(0) \end{bmatrix}$$

En supposant le bruit blanc spatialement, la matrice d'autocorrélation spatio-temporelle du bruit post corrélation s'écrit :

$$\mathrm{E}\Big(\mathbf{b}_{NP,T_{\text{int}}} \times \mathbf{b}_{NP,T_{\text{int}}}^H\Big) = \mathbf{C} = \tilde{\sigma} \times \mathbf{I}_{mn} \otimes \tilde{\mathbf{R}}_P$$

Enfin, on note $\check{\mathbf{R}}_C^H$

$$\check{\mathbf{R}}_C^H\big(\varepsilon_\tau - \tau_{rl}, \varepsilon_v - v_{rl}\big) = \tilde{\mathbf{R}}_C^H\big(\varepsilon_\tau - \tau_{rl}, \varepsilon_v - v_{rl}\big) \times \Big[\mathbf{I}_m \otimes \tilde{\mathbf{R}}_P^{-1}\Big]$$

soit :

$$\breve{\mathbf{R}}_C^H\left(\varepsilon_\tau - \tau_{rl}, \varepsilon_\nu - \nu_{rl}\right) = \left\{ \begin{array}{c} \left[\left[\begin{pmatrix} r(\varepsilon_\tau - \tau_{rl,1} + \dfrac{(p-1)}{2}T_e) \\ \vdots \\ r(\varepsilon_\tau - \tau_{rl,1} - \dfrac{(p-1)}{2}T_e) \end{pmatrix}^H \times \widetilde{\mathbf{R}}_P^{-1} \times \exp\left[-2j\pi.(\varepsilon_\nu - \nu_{rl}).T_{\text{int}}\right]\right]^T\right] \\ \left[\begin{pmatrix} r(\varepsilon_\tau - \tau_{rl,2} + \dfrac{(p-1)}{2}T_e) \\ \vdots \\ r(\varepsilon_\tau - \tau_{rl,2} - \dfrac{(p-1)}{2}T_e) \end{pmatrix}^H \times \widetilde{\mathbf{R}}_P^{-1} \times \exp\left[-2j\pi.(\varepsilon_\nu - \nu_{rl}).2.T_{\text{int}}\right]\right]^T \\ \vdots \\ \left[\begin{pmatrix} r(\varepsilon_\tau - \tau_{rl,N} + \dfrac{(p-1)}{2}T_e) \\ \vdots \\ r(\varepsilon_\tau - \tau_{rl,N} - \dfrac{(p-1)}{2}T_e) \end{pmatrix}^H \times \widetilde{\mathbf{R}}_P^{-1} \times \exp\left[-2j\pi.(\varepsilon_\nu - \nu_{rl}).m.T_{\text{int}}\right]\right]^T \end{array} \right\}$$

Le principe de l'algorithme SAGE consiste à décomposer le signal reçu sur l'ensemble des trajets et à estimer, par maximum de vraisemblance, les paramètres de chaque trajet.

Pour l'architecture et le modèle de signal proposé, l'opposé de la fonction Log-vraisemblance $\Lambda_l(\psi_l)$ pour le trajet '$l$' s'écrit à une constante et un coefficient multiplicatif prés :

$$\Lambda_l(\boldsymbol{\psi}_l) = \left(\mathbf{X}_l(\boldsymbol{\psi}_l) - \hat{\mathbf{X}}_l\right)^H \times \mathbf{C}^{-1} \times \left(\mathbf{X}_l(\boldsymbol{\psi}_l) - \hat{\mathbf{X}}_l\right)$$

où la notation ^ désigne l'estimée d'une grandeur. On montre alors que maximiser la vraisemblance pour le trajet '$l$' revient à maximiser le terme $\widetilde{\Lambda}_l(\psi_l)$ défini par :

$$\widetilde{\Lambda}_l(\boldsymbol{\psi}_l) = \frac{\left\|\left[\mathbf{a}^H(\theta_l, \varphi_l) \otimes \breve{\mathbf{R}}_C^H(\varepsilon_\tau - \tau_{rl}, \varepsilon_\nu - \nu_{rl})\right] \times \hat{\mathbf{X}}_l\right\|^2}{m \times \breve{\mathbf{R}}_C^H(\varepsilon_\tau - \tau_{rl}, \varepsilon_\nu - \nu_{rl}) \times \widetilde{\mathbf{R}}_C(\varepsilon_\tau - \tau_{rl}, \varepsilon_\nu - \nu_{rl})}$$

La phase « E-Step » de l'algorithme SAGE consiste à isoler un trajet particulier, et la phase « M-Step » consiste à estimer les paramètres du trajet par maximum de vraisemblance. On boucle alors sur l'ensemble des trajets puis on reboucle itérativement jusqu'à convergence de l'algorithme. Le critère de convergence porte généralement sur la norme de la mise à jour du vecteur des paramètres à estimer. On peut également ajouter un critère sur l'amplitude du trajet à estimer pour le distinguer du bruit.

La mise en équation des phases « E-Step » et «M-Step » en mode poursuite est la suivante :

- E-Step

$$\hat{\mathbf{X}}_{l_0} = \mathbf{X} - \sum_{\substack{l=0 \\ l \neq l_0}}^{L-1} \mathbf{X}_l(\hat{\boldsymbol{\psi}}_l)$$

- M-Step

o Recherche du retard et Doppler relatifs. Afin de réduire la charge calculatoire, on construit dans un premier temps le vecteur $\mathbf{Y}_{l_0}$ qui exploite les estimées des DOA (direction d'arrivée des signaux), puis on maximise les vraisemblances pour le retard et le Doppler relatif au voisinage des solutions de l'itération précédente :

$$\mathbf{Y}_{l_0} = \left[\mathbf{a}(\hat{\theta}_l, \hat{\varphi}_l)^H \otimes \mathbf{I}_{NP}\right] \times \hat{\mathbf{X}}_{l_0}$$

$$\hat{\tau}_{rl_0} = \arg\max_{\tau_{rl}} \left( \frac{\left|\breve{\mathbf{R}}_C^H(\varepsilon_\tau - \tau_{rl}, \hat{\varepsilon}_v - \hat{v}_{rl}) \times \mathbf{Y}_{l_0}\right|^2}{\breve{\mathbf{R}}_C^H(\varepsilon_\tau - \tau_{rl}, \hat{\varepsilon}_v - \hat{v}_{rl}) \times \widetilde{\mathbf{R}}_C(\varepsilon_\tau - \tau_{rl}, \hat{\varepsilon}_v - \hat{v}_{rl})} \right)$$

$$\hat{v}_{rl_0} = \arg\max_{v_{rl}} \left( \frac{\left|\breve{\mathbf{R}}_C^H(\hat{\varepsilon}_\tau - \hat{\tau}_{rl}, \varepsilon_v - v_{rl}) \times \mathbf{Y}_{l_0}\right|^2}{\breve{\mathbf{R}}_C^H(\hat{\varepsilon}_\tau - \hat{\tau}_{rl}, \varepsilon_v - v_{rl}) \times \widetilde{\mathbf{R}}_C(\hat{\varepsilon}_\tau - \hat{\tau}_{rl}, \varepsilon_v - v_{rl})} \right)$$

o Recherche des DOA. Afin de réduire la charge calculatoire, on construit dans un premier temps le vecteur $\mathbf{Z}_{l_0}$ qui exploite les estimées des retards et Doppler relatifs, puis on maximise les vraisemblances pour les DOA au voisinage des solutions de l'itération précédente :

$$\mathbf{Z}_{l_0} = \left[\mathbf{I}_m \otimes \breve{\mathbf{R}}_C^H(\hat{\varepsilon}_\tau - \hat{\tau}_{rl}, \hat{\varepsilon}_v - \hat{v}_{rl})\right] \times \hat{\mathbf{X}}_{l_0}$$

$$\hat{\theta}_{l_0} = \arg\max_{\theta_l} \left(\left|\mathbf{a}(\theta_l, \hat{\varphi}_l)^H \times \mathbf{Z}_{l_0}\right|\right)$$

$$\hat{\varphi}_{l_0} = \arg\max_{\varphi_l} \left(\left|\mathbf{a}(\hat{\theta}_l, \varphi_l)^H \times \mathbf{Z}_{l_0}\right|\right)$$

o Détermination de l'amplitude complexe post-corrélation. Elle s'exprime directement en fonction des autres paramètres par :

$$\hat{\tilde{\gamma}}_l = \frac{\left[\mathbf{a}(\hat{\theta}_l, \hat{\varphi}_l) \otimes \breve{\mathbf{R}}_C(\hat{\varepsilon}_\tau - \hat{\tau}_{rl}, \hat{\varepsilon}_v - \hat{v}_{rl})\right]^H \times \hat{\mathbf{X}}_l}{m \times \breve{\mathbf{R}}_C^H(\hat{\varepsilon}_\tau - \hat{\tau}_{rl}, \hat{\varepsilon}_v - \hat{v}_{rl}) \times \widetilde{\mathbf{R}}_C(\hat{\varepsilon}_\tau - \hat{\tau}_{rl}, \hat{\varepsilon}_v - \hat{v}_{rl})}$$

En pratique, il est entendu que $\breve{\mathbf{R}}_C^H$ ne sera pas à recalculer numériquement à la volée lors du traitement par le récepteur afin de ne pas alourdir la charge calculatoire. Au pire, des valeurs numériques pourront être pré-calculées et stockées, voire, sous certaines hypothèses, une solution analytique pourra être proposée.

Par exemple, si on néglige l'évolution du retard en fonction du Doppler relatif (ce qui revient à négliger une variation de l'ordre de $6.10^{-10}$ s pour un Doppler de 100 Hz et une durée d'observation de 10 ms) et que le terme $(\varepsilon_\tau - \tau_{rl})$ est multiple du pas de temps entre les corrélateurs, alors chaque bloc (terme correspondant à 1 ligne à retard post-corrélation) de la matrice $\widetilde{\mathbf{R}}_C$ se ramène à 1 Dirac multiplié par un terme de phase :

EP 2 609 447 B1

$$\check{\mathbf{R}}_C\left(k.T_e, \varepsilon_v - \nu_{rl}\right) \approx \left\{ \begin{array}{c} \boldsymbol{\delta}_P(k) \times \exp\left[-2j\pi.(\varepsilon_v - \nu_{rl}).T_{\text{int}}\right] \\ \boldsymbol{\delta}_P(k) \times \exp\left[-2j\pi.(\varepsilon_v - \nu_{rl}).2.T_{\text{int}}\right] \\ \vdots \\ \boldsymbol{\delta}_P(k) \times \exp\left[-2j\pi.(\varepsilon_v - \nu_{rl}).m.T_{\text{int}}\right] \end{array} \right\}^T$$

avec :

$$\boldsymbol{\delta}_p(k) = \underset{-\frac{p-1}{2} \quad \cdots \quad k-1 \; k \; k+1 \quad \cdots \quad \frac{p-1}{2}}{\left[0 \quad \cdots \quad 0 \quad 1 \quad 0 \quad \cdots \quad 0\right]^T}$$

Le système conçu selon une architecture STAP multi-corrélateur permet de réduire la complexité et les ressources mises en oeuvre. Pour un algorithme de Maximisation de vraisemblance appliqué à une architecture conventionnelle avec n antennes, traitant un signal d'une durée de 10ms échantillonné à une cadence 2Mhz, il est nécessaire d'implémenter une matrice de $n*2.10^6*10^{-2} = n*2.10^4$ points. Dans le cadre de l'invention, c'est à dire pour un dispositif de localisation comportant une architecture Spatio-temporelle multi-corrélateurs couplé avec un algorithme de maximisation de vraisemblance opérant sur la même durée de signal, les calculs sont réalisés avec une matrice de taille réduite par rapport à une architecture conventionnelle. En considérant les hypothèses précitées, la taille de matrice est égale à n*p*m, soit au nombre n d'antennes, multiplié par le nombre m de lignes à retard, multiplié par le nombre p de corrélateurs. Pour fixer les idées, considérons que les corrélateurs sont espacés de 0.2 chips (0.2 période symbole d'un code d'étalement d'un signal de Navigation). On souhaite estimer la fonction d'intercorrélation sur une durée totale de 2 chips, on utilise donc p = 10 corrélateurs. Chaque corrélateur est basé sur une intégration sur 1 ms et on traite 10 ms de signal, on utilise donc m = 10 lignes à retard. Par conséquent, pour la cadence d'échantillonnage et le nombre de corrélateurs proposés ici à titre d'exemple, l'invention permet une réduction d'un facteur 200 de la dimension de la matrice des signaux à traiter.

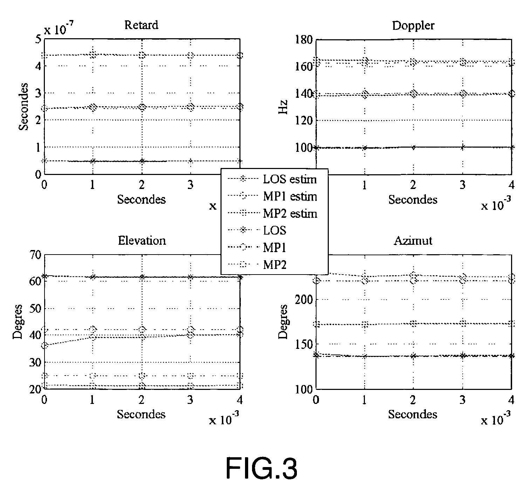

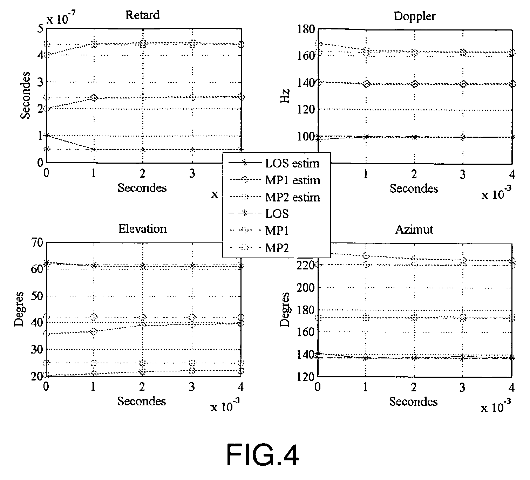

En termes de performances, l'invention permet d'obtenir une précision similaire à celle d'un algorithme SAGE classique. Les figures 3 et 4 illustrent ces performances dans le cas d'une simulation numérique selon le scénario suivant : les signaux simulés sont de type GPS C/A. Un trajet direct ainsi que deux échos sont simulés avec les paramètres résumés dans le tableau ci-dessous. Les signaux sont générés en bande de base à une cadence de 10 MHz, les corrélateurs sont espacés de 0.1 chip, 20 lignes de traitement par antenne sont utilisées et 30 lignes à retard par ligne de traitement sont utilisées. Les corrélations sont effectuées sur 1 ms, soit un traitement globalement effectué sur 30ms. La puissance de bruit dans la bande de réception est de -132 dBW. Le réseau d'antennes est carré à quatre capteurs espacés de la demi-longueur d'onde de L1.

|  | LOS | MP1 | MP2 |
|---|---|---|---|
| Puissance (dBW) | -150 | -155 | -155 |
| Retard (chips) | 0.05 | 0.2 | 0.4 |
| Doppler (Hz) | 100 | 139 | 162 |
| Elevation (°) | 61 | 42.1 | 20 |
| Azimut (°) | 131 | 220 | 172 |

La figure 3 illustre la capacité de l'invention à estimer au cours du temps les paramètres des signaux simulés. On y représente en pointillés les paramètres simulés et en trait plein les paramètres estimés par l'invention. La figure 4 illustre la capacité d'un traitement par un algorithme SAGE classique à estimer les paramètres des signaux simulés. On observe des performances similaires entre les deux traitements sachant que dans ce cas, l'invention permet une réduction d'un facteur 500 de la dimension de la matrice des signaux à traiter.

L'invention s'applique aux stations sol de référence ou d'observation des constellations de satellites de navigation. Cette invention peut être utilisée dans des terminaux mobiles pour améliorer la solution de navigation dans des environnements urbains, voire aéroportuaires.

9

**Revendications**

1.  Dispositif de localisation apte à discriminer un signal utile de signaux multi-trajets, ledit dispositif comportant au moins deux capteurs (A1, A2) de signaux de radiolocalisation et des moyens de traitement des signaux ($\mu$P) aptes à mettre en oeuvre un algorithme d'estimation du maximum de vraisemblance dans le but d'estimer des paramètres représentatifs du signal utile et des signaux multi-trajet, chacun desdits capteurs (A1 ; A2) étant connecté à au moins deux lignes de traitement des signaux, chaque ligne de traitement comportant un corrélateur (C11, C12) et étant agencée de sorte que les moyens de traitement des signaux ($\mu$P) calculent les paramètres représentatifs du signal utile et des signaux multi-trajet à partir des signaux issus des lignes de traitement, **caractérisé en ce que** chaque ligne de traitement comporte au moins une ligne de retard (R11m) connectée par une première extrémité à la sortie du corrélateur (C11) et par une seconde extrémité à une entrée des moyens de traitement des signaux (uP) afin de suivre l'évolution temporelle des sorties des corrélateurs (C11, C12) les retards introduits par les lignes de retard correspondant à différents multiples entiers de la durée d'intégration des corrélateurs.

2.  Dispositif de localisation selon la revendication 1, **caractérisé en ce qu'**un corrélateur (C11) d'une première ligne de traitement est espacé d'une fraction de la période symbole du code d'étalement par rapport au corrélateur (C12) d'une seconde ligne de traitement.

3.  Dispositif selon l'une quelconque des revendications précédentes, **caractérisé en ce que** l'algorithme d'estimation du maximum de vraisemblance est de type « SAGE ».

4.  Dispositif selon l'une quelconque des revendications précédentes, **caractérisé en ce que** lesdits paramètres représentatifs du signal utile et des signaux multi-trajet sont le retard de propagation, la fréquence doppler et la direction d'arrivée.

5.  Système de localisation **caractérisé en ce qu'**il comporte un assemblage de D dispositifs selon l'une quelconque des revendications précédentes de manière à traiter D signaux de radionavigation en provenance de D satellites distincts.

6.  Système de localisation selon la revendication 5 **caractérisé en ce que** D est supérieur ou égal à 4.

7.  Procédé d'estimation des paramètres de signal utile et de signaux multi-trajet originaires d'un signal de radiolocalisation émis par un satellite au moyen d'un dispositif de localisation comportant au moins deux capteurs aptes à recevoir ledit signal, **caractérisé en ce qu'**il comporte les étapes suivantes :

    • une étape de corrélation avec un code local du signal reçu par lesdits capteurs au moyen de corrélateurs (C11, C12), un corrélateur (C11, C12) étant compris dans une ligne de traitement, chaque capteur comportant au moins deux telles lignes de traitement,
    • une étape de construction pour chaque capteur d'une fonction d'intercorrélation échantillonnée du signal reçu avec le code local, ladite fonction correspondant à un vecteur composé de l'ensemble des valeurs produites sur une période d'intégration Tint par un ensemble de lignes de retard comprises dans les lignes de traitement, les retards introduits par les lignes de retard correspondant à différents multiples entiers de la durée d'intégration des corrélateurs,
    • une étape de détermination d'une fonction d'intercorrélation spatiotemporelle, ladite fonction étant obtenue par concaténation des vecteurs obtenus à l'étape précédente pour chaque capteur ;
    • une étape de calcul d'une vraisemblance à partir de la fonction d'intercorrélation spatio-temporelle ;
    • une étape d'estimation des paramètres représentatifs du signal utile et des signaux multi-trajet par application d'un algorithme de maximum de vraisemblance.

**Patentansprüche**

1.  Ortungsvorrichtung zum Unterscheiden zwischen einem Nutzsignal und Mehrwegsignalen, wobei die Vorrichtung wenigstens zwei Sensoren (A1, A2) von Funkortungssignalen und Mittel zum Verarbeiten der Signale ($\mu$P) umfasst, die einen Maximum-Likelihood-Schätzalgorithmus ausführen können mit dem Ziel, Parameter zu schätzen, die für das Nutzsignal und die Mehrwegsignale repräsentativ sind, wobei jeder der Sensoren (A1, A2) mit wenigstens zwei Signalverarbeitungsleitungen verbunden ist, wobei jede Verarbeitungsleitung einen Korrelator (C11, C12) umfasst und so ausgelegt ist, dass die Signalverarbeitungsmittel ($\mu$P) die für das Nutzsignal und die Mehrwegsignale repräsentativen Parameter anhand der von den Verarbeitungsleitungen kommenden Signale berechnen, **dadurch gekennzeichnet, dass** jede Verarbeitungsleitung wenigstens eine Verzögerungsleitung (R11m) umfasst, die an einem ersten Ende mit dem Ausgang des Korrelators (C11) und an einem zweiten Ende mit einem Eingang der Signalverarbeitungsmittel ($\mu$P) verbunden ist, um die zeitliche Entwicklung der Ausgänge der Korrelatoren (C11, C12) zu verfolgen, wobei die durch die Verzögerungsleitungen eingeführten Verzögerungen unterschiedlichen ganzzahligen Vielfachen der Integrationsdauer der Korrelatoren entsprechen.

2. Ortungsvorrichtung nach Anspruch 1, **dadurch gekennzeichnet, dass** ein Korrelator (C11) einer ersten Verarbeitungsleitung um einen Bruchteil der Symbolperiode des Spreizcodes in Bezug auf den Korrelator (C12) einer zweiten Verarbeitungsleitung beabstandet ist.

3. Vorrichtung nach einem der vorherigen Ansprüche, **dadurch gekennzeichnet, dass** der Maximum-Likelihood-Schätzalgorithmus vom "SAGE"-Typ ist.

4. Vorrichtung nach einem der vorherigen Ansprüche, **dadurch gekennzeichnet, dass** die für das Nutzsignal und die Mehrwegsignale repräsentativen Parameter Ausbreitungsverzögerung, Doppler-Frequenz und Ankunftsrichtung sind.

5. Ortungssystem, **dadurch gekennzeichnet, dass** es eine Gruppe von D Vorrichtungen nach einem der vorherigen Ansprüche umfasst, um D Funknavigationssignale zu verarbeiten, die von D verschiedenen Satelliten kommen.

6. Ortungssystem nach Anspruch 5, **dadurch gekennzeichnet, dass** D gleich oder größer als 4 ist.

7. Verfahren zum Schätzen der Parameter eines Nutzsignals und von Mehrwegsignalen, die von einem durch einen Satelliten ausgestrahlten Funkortungssignal stammen, mittels einer Ortungsvorrichtung, die wenigstens zwei Sensoren umfasst, die das Signal empfangen können, **dadurch gekennzeichnet, dass** es die folgenden Schritte beinhaltet:

   • einen Schritt des Korrelierens des von den Sensoren empfangenen Signals mit einem lokalen Code mittels Korrelatoren (C11, C12), wobei ein Korrelator (C11, C12) in einer Verarbeitungsleitung enthalten ist, wobei jeder Sensor wenigstens zwei solcher Verarbeitungsleitungen enthält,
   • einen Schritt des Konstruierens, für jeden Sensor, einer abgetasteten Interkorrelationsfunktion des empfangenen Signals mit dem lokalen Code, wobei die Funktion einem Vektor bestehend aus dem Satz von auf einer Integrationsperiode Tint durch einen Satz von in den Verarbeitungsleitungen enthaltenen Verzögerungsleitungen produzierten Werten entspricht, wobei die durch die Verzögerungsleitungen eingeführten Verzögerungen unterschiedlichen ganzzahligen Vielfachen der Integrationsdauer der Komelatoren entsprechen,
   • einen Schritt des Ermittelns einer räumlich-zeitlichen Interkorrelationsfunktion, wobei die Funktion durch Verketten der Vektoren erhalten wird, die im vorherigen Schritt für jeden Sensor erhalten wurden;
   • einen Schritt des Berechnens einer Wahrscheinlichkeit auf der Basis der räumlich-zeitlichen Interkorrelationsfunktion;
   • einen Schritt des Schätzens der Parameter, die für das Nutzsignal und die Mehrwegsignale repräsentativ sind, durch Anwenden eines Maximum-Likelihood-Algorithmus.

## Claims

1. A location device capable of discriminating a useful signal from multi-path signals, said device comprising at least two radiolocation signal sensors (A1, A2) and signal processing means ($\mu$P) capable of implementing a maximum likelihood estimation algorithm in order to estimate parameters representative of the useful signal and the multi-path signals, each of said sensors (A1, A2) being connected to at least two signal processing lines, each processing line comprising a correlator (C11, C12) and being arranged so that the signal processing means ($\mu$P) compute the parameters representative of the useful signal and the multi-path signals on the basis of the signals coming from the processing lines, **characterised in that** each processing line comprises at least one delay line (R11m) connected by a first end to the output of the correlator (C11) and by a second end to an input of the signal processing means ($\mu$P) in order to follow the temporal evolution of the outputs of the correlators (C11, C12), the delays introduced by the delay lines corresponding to different integer multiples of the duration of integration of the correlators.

2. The location device according to claim 1, **characterised in that** a correlator (C11) of a first processing line is separated by a fraction of the symbol period of the spreader code relative to the correlator (C12) of a second processing line.

3. The device according to any one of the preceding claims, **characterised in that** the maximum likelihood estimation algorithm is of the "SAGE" type.

4. The device according to any one of the preceding claims, **characterised in that** said parameters representative of said useful signal and said multi-path signals are the propagation delay, the Doppler frequency and the direction of animal.

5. A location system, **characterised in that** it comprises an assembly of D devices according to any one of the preceding claims in order to process D radionavigation signals coming from D distinct satellites.

6. The location system according to claim 5, **characterised in that** D is greater than or equal to 4.

7. A method for estimating the parameters of a useful signal and of multi-path signals originating from a radio location signal transmitted by a satellite by means of a location device comprising at least two sensors capable of receiving said signal, **characterised in that** it comprises the following steps:

  • a step of correlating the signal received by said sensors with a local code by means of correlators (C11, C12), with a correlator (C11, C12) being included in a processing line, each sensor comprising at least two such processing lines;
  • a step of constructing, for each sensor, a sampled inter-correlation function of the received signal with the local code, said function corresponding to a vector made up of all of the values produced on an integration period Tint by a set of delay lines included in the processing lines, the delays introduced by the delay lines corresponding to various integer multiples of the integration duration of the correlators;
  • a step of determining a space-time inter-correlation function, said function being obtained by concatenating the vectors obtained in the preceding step for each sensor;
  • a step of computing a likelihood on the basis of said space-time inter-correlation function;
  • a step of estimating the parameters representative of the useful signal and the multi-path signals by applying a maximum likelihood algorithm.

FIG.1

FIG.2

FIG.3

FIG.4

**RÉFÉRENCES CITÉES DANS LA DESCRIPTION**

**Documents brevets cités dans la description**

- US 6437733 B1

**Littérature non-brevet citée dans la description**

- **A.J. VAN DIERENDONCK.** Theory and Performance of Narrow Correlator Spacing in a GPS receiver. *Journal of The Institute of the Navigation,* 1992, vol. 39 (3

- **R. VAN NEE.** The Multipath Estimating Delay Lock Loop : Approaching Theoretical Accuracy Limits. *journal IEEE,* 1994, 246-251